# EUROPÄISCHE PATENTANMELDUNG

(11) **EP 1 251 432 A2**
(43) Veröffentlichungstag der Anmeldung: **23.10.2002**
(21) Anmeldenummer: 02006262.6
(22) Anmeldetag: 20.03.2002
(51) Int. Cl.: G06F 13/40

(54) **Schnittstelle für die Datenübertragung zwischen zwei Bussystemen und Betriebsverfahren dafür**

(30) Priorität: 20.04.2001 DE 10119472
(71) Anmelder: Harman/Becker Automotive Systems (Becker Division) GmbH, 76307 Karlsbad (DE)
(72) Erfinder: Bähren, Frank, 76137 Karlsruhe (DE)
(74) Vertreter: Patentanwälte Westphal, Mussgnug & Partner

(57) **Zusammenfassung**

Eine Schnittstelle für die Übermittlung von Nachrichten zwischen zwei Bussystemen umfasst eine Empfängereinrichtung (3, 5) zum Empfangen einer Nachricht von dem ersten Bussystem (1, 2), eine Klassifikationseinrichtung (7, 13) zum Klassifizieren der von der ersten Empfängereinrichtung (3, 5) empfangenen Nachricht in eine von mehreren vorgegebenen Klassen, eine Übersetzungseinrichtung (8, 14) zum Übersetzen der Nachricht in eine auf dem zweiten Bussystem (2, 1) zu sendende Nachricht anhand einer für jede Klasse vorgegebenen Vorschrift, und eine Sendereinrichtung (4, 6) zum Senden der übersetzten Nachricht auf dem zweiten Bussystem (2, 1).

## Beschreibung

Die vorliegende Erfindung betrifft eine Schnittstelle für die Übermittlung von Nachrichten zwischen zwei Bussystemen und ein Verfahren zur Übermittlung solcher Nachrichten.

In der Technik stellt sich häufig die Aufgabe, Nachrichten, die in einem Bussystem mit einem bestimmten Mechanismus zur Informationsverteilung transportiert werden, für Geräte verfügbar zu machen, die an ein zweites Bussystem mit einem anders gearteten Informationsverteilungsmechanismus angeschlossen sind. Bisherige Lösungen dieses Problems liefen darauf hinaus, dass Nachrichten des ersten Bussystems an einer Schnittstelle zum zweiten Bussystem in Nachrichten eines geeigneten Typs des zweiten Bussystems "verpackt" wurden, wobei es dann den angeschlossenen Geräten oblag, die übertragenen Daten zu "entpacken", d.h. die Nachricht im ursprünglichen Format des ersten Bussystems wieder herzustellen und in angemessener Weise zu interpretieren. Eine solche Lösung gewährleistet aber im allgemeinen keine befriedigende Interoperabilität der Bussysteme. Zum einen ist es nicht möglich, die an das zweite Bussystem angeschlossenen Geräte ohne Rücksicht auf die Gegebenheiten des ersten Bussystems zu entwickeln, da diese Geräte in der Lage sein müssen, die "ausgepackten" Nachrichten im Format des ersten Bussystems zu interpretieren. Zum anderen können die Informationsverbreitungsmechanismen und Übertragungskapazitäten der zwei Bussysteme so unterschiedlich sein, dass eine Umsetzung jeder vom ersten System empfangenen Nachricht in eine auf dem zweiten System verbreitete verpackte Nachricht ein sinnvolles Funktionieren der Systeme nicht ermöglicht.

Aufgabe der vorliegenden Erfindung ist daher, eine Schnittstelle für die Übertragung von Nachrichten von einem Bussystem in ein zweites sowie ein Verfahren zur Übertragung solcher Nachrichten anzugeben, die eine volle Interoperabilität der Bussysteme ermöglichen, und die es erlauben, an das zweite Bussystem anzuschließende Geräte ohne Rücksicht auf die Gegebenheiten des ersten Bussystems zu entwickeln bzw. für eine gegebene Aufgabe bereits existierende, mit dem zweiten Bussystem kompatible Geräte mit aus Nachrichten des ersten Bussystems abgeleiteten Nachrichten anzusprechen.

Die Aufgabe wird zum einen gelöst durch eine Schnittstelle für die Übermittlung von Nachrichten zwischen zwei Bussystemen, mit einer ersten Empfängereinrichtung zum Empfangen einer Nachricht von dem ersten Bussystem, eine ersten Klassifikationseinrichtung zum Klassifizieren der von der ersten Empfängereinrichtung empfangenen Nachricht in eine von mehreren vorgegebenen Klassen, einer ersten Übersetzungseinrichtung zum Übersetzen der Nachricht in eine auf dem zweiten Bussystem zu sendende Nachricht anhand einer für jede Klasse vorgegebenen Vorschrift und einer ersten Sendereinrichtung zum Senden der übersetzten Nachricht auf dem zweiten Bussystem. Dabei erlaubt es die Klassifizierung, jede Nachricht entsprechend ihrem technischen Bedeutungsgehalt angemessen umzusetzen.

Zweckmäßigerweise sind zweite Einrichtungen der oben aufgezählten Art auch für die Übermittlung von Nachrichten in Gegenrichtung vom zweiten zum ersten Bussystem vorgesehen.

Unabhängig vom Bussystem besteht eine Nachricht im allgemeinen aus einer Angabe über eine von einem Gerät auszuführende Operation, eventuell verknüpft mit einer Adresse des Geräts und mit einem oder mehreren Parametern. Die Angabe über die auszuführende Funktion kann z.B. aus einem oder mehreren Bytes an einer festgelegten Stelle der Nachricht bestehen.

Die Angabe kann auch über mehrere getrennte Bereiche der Nachricht verteilt sein.

Bezogen auf das Beispiel eines Bussystems in einem Kraftfahrzeug kann z.B. ein erster Zahlenwert der Angabe eine Anforderung an einen an das Bussystem angeschlossenen Sensor zum Rückmelden einer Kühlwassertemperatur des Fahrzeugs, ein zweiter Wert eine Nachricht, die die vom Sensor rückgemeldete Kühlwassertemperatur als Parameter enthält, ein dritter Zahlenwert eine Anforderung an einen Sensor zum Melden eines Drucks im Bremssystems, etc. repräsentieren. Anzahl und Bedeutung der in einer Nachricht enthaltenen Parameter hängt von dieser Angabe ab. Sie stellt daher ein Klassifizierungsdatum dar, anhand dessen die Klassifikationseinrichtung jede empfangene Nachricht in eine Klasse einteilen kann, was es der Übersetzungseinrichtung ermöglicht, die Nachricht in angemessener Weise zu übersetzen.

Es gibt Busprotokolle, die verlangen, dass eine Nachricht einer bestimmten Klasse zyklisch wiederholt wird, wohingegen eine Nachricht mit dem gleichen Informationsinhalt in einem zweiten Bussystem eventuell nur dann wiederholt wird, wenn sich ein Parameter der Nachricht ändert. Um solche Nachrichten korrekt umsetzen zu können, verfügt die Schnittstelle zweckmäßigerweise über einen Zeitgeber, der auf den Empfang einer Nachricht über eines der Bussysteme reagiert, in dem er ein zyklisches Aussenden der übersetzten Nachricht auf dem anderen Bussystem steuert.

In dem Fall, wo eine Nachricht in beiden Bussystemen zyklisch übertragen wird, die Wiederholraten der Nachricht sich jedoch unterscheiden, ist es zweckmäßig, wenn die Schnittstelle ferner über eine Vorrichtung zum Anpassen der Wiederholraten dieser Nachrichten verfügt. Diese Vorrichtung kann insbesondere ein Zähler zum Zählen der auf einem der Bussysteme eintreffenden Nachrichten einer bestimmten Klasse sein, der das Senden der übersetzten Nachricht auf dem jeweils anderen Bussystem veranlasst, wenn der Zählwert des Zählers einen Grenzwert überschreitet. Durch die geeignete Wahl des Grenzwerts ist das Verhältnis der Zykluszeiten, mit denen die Nachrichten auf den zwei Bussystemen erzeugt werden, einstellbar.

Um umgekehrt eine Nachricht einer gegebenen Klasse von einem Bussystem, in dem Nachrichten der betreffenden Klasse zyklisch erzeugt werden, in eine Nachricht für ein Bussystem umzusetzen, wo Nachrichten nur bei Änderung eines Parameters erzeugt werden, ist die Schnittstelle zweckmäßigerweise mit einem Komparator ausgestattet, der dazu dient, eine von einem der Bussysteme empfangene Nachricht einer gegebenen Klasse mit einer zuvor von diesem einen Bussystem empfangenen Nachricht der gleichen Klasse zu vergleichen und die empfangene Nachricht nur dann auszugeben, wenn ihr Inhalt von dem der zuvor empfangenen Nachricht der gleichen Klasse verschieden ist. Mit Hilfe eines solchen Komparators können Wiederholungen von gleichen Nachrichten auf dem jeweils anderen Bussystem unterdrückt werden, so dass die Übertragungskapazität dieses anderen Bussystems für andere Aufgaben freigehalten werden kann.

Da die Reihenfolge der Parameter einer Nachricht im Prinzip willkürlich festgelegt werden kann und daher von einem zum anderen Bussystem variieren kann, ist die Übersetzungseinrichtung vorzugsweise mit einer Permutiereinheit zum Permutieren von den Parametern entsprechenden Elementen der empfangenen Nachricht ausgestattet.

Die Übersetzungseinrichtung verfügt ferner vorzugsweise über eine Recheneinheit zum Anwenden einer mathematischen Rechenvorschrift auf ein Element der Nachricht. Eine solche Recheneinheit ist zweckmäßig, wenn die Parameter der zu übersetzenden Nachrichten Zahlenwerte sind, deren Darstellung bei den zwei Bussystemen unterschiedlich sein kann. Derartige Unterschiede können resultieren aus der Art der binären Darstellung der Zahlenwerte, z.B. als natürliche Zahlen mit oder ohne Vorzeichen, als reelle Zahlen mit Festkomma-, Fließkomma-, oder Exponentialdarstellung und unterschiedlicher Genauigkeit (Bitzahl), oder auch aus der Zugrundelegung unterschiedlicher Maßeinheiten oder Skalen, wenn es sich bei den Parametern um Messwerte handelt.

Eine bevorzugte Anwendung der Schnittstelle ist die Umsetzung von Nachrichten zwischen einen CAN-Bussystem und einem MOST-Bussystem in einem Kraftfahrzeug.

Weitere Merkmale und Vorteile der Erfindung ergeben sich aus der nachfolgenden detaillierten Beschreibung dieses bevorzugten Ausführungsbeispiels mit Bezug auf die Figuren. Es zeigen:
- Fig. 1: ein Blockdiagramm der erfindungsgemäßen Schnittstelle; und
- Figs. 2-7: Flussdiagramme zur Veranschaulichung der Arbeitsweise der Schnittstelle.

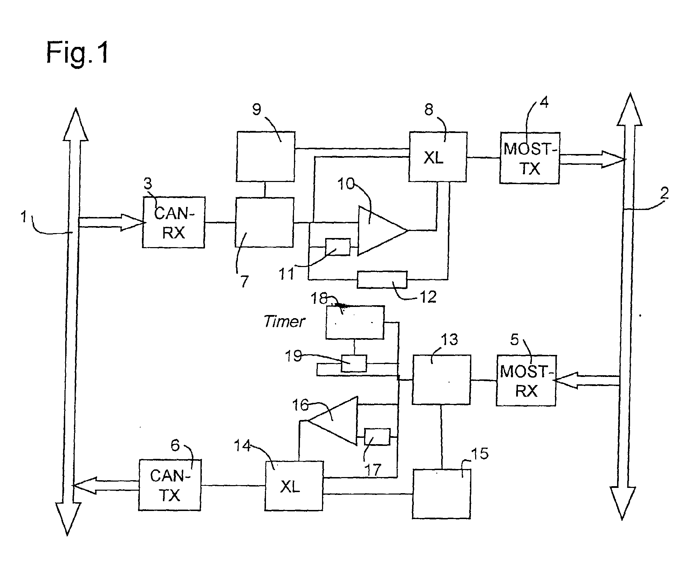

Fig. 1 zeigt ein Blockdiagramm der erfindungsgemäßen Schnittstelle zwischen einem CAN-Bus 1 und einem MOST-Bus 2. Eine CAN-Empfängereinrichtung 3 dient zum Umsetzen des auf dem CAN-Bus 1 verwendeten physikalischen Datenformats in eine in der Schnittstelle verwendete Darstellung; umgekehrt dient ein MOST-Sendermodul 4 zur Umsetzung von der internen Darstellung auf das auf dem MOST-Bus 2 verwendete physikalische Format.

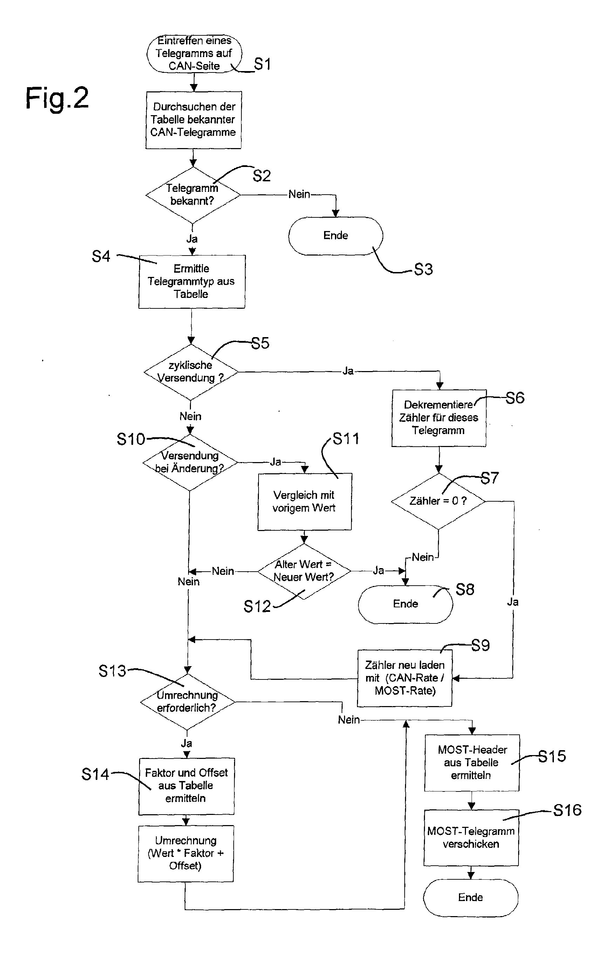

An die CAN-Empfängereinrichtung 3 ist eine Klassifikationseinrichtung 7 angeschlossen, die die Klasse der empfangenen Nachricht ermittelt. Allgemein gehören zwei CAN-Nachrichten unterschiedlichen Klassen an, wenn sie unterschiedliche Report-Ids oder unterschiedliche Format-Ids aufweisen. An den Ausgang der Klassifikationseinrichtung 7 ist eine Übersetzungseinrichtung 8 angeschlossen, die von der Klassifikationseinrichtung 7 die Angabe über die Klasse der Nachricht und deren Parameter, sofern vorhanden, empfängt. Anhand der Klassenangabe greift die Übersetzungseinrichtung 8 auf einen Speicher 9 zu, der zu jeder Klasse eine Vorschrift für die Umsetzung der Nachricht in eine MOST-Nachricht in Form eines Eintrags in einer Tabelle oder von der Übersetzungseinrichtung 8 ausführbaren Programms enthält. Auf die in einer solchen Tabelle enthaltenen Informationen bzw. die möglichen Schritte eines solchen Programms wird im folgenden mit Bezug auf Fig. 2 noch genauer eingegangen. Die Klassenangabe kann z.B. ein Zeiger auf einen der Klasse entsprechenden Eintrag oder ein entsprechendes Programm im Speicher 9 sein.

An den Ausgang der Klassifikationseinrichtung 7 sind ferner eine Mehrzahl von Komparatoren 10, Pufferspeichern 11 und Zählern 12 angeschlossen, die jeweils einer bestimmten Klasse von Nachrichten zugeordnet sind. Wenn die Klassifikationseinrichtung 7 eine Nachricht einer Klasse ausgibt, der ein Komparator 10 und ein Pufferspeicher 11 zugeordnet ist, so vergleicht der Komparator 10 die von der Klassifikationseinrichtung 7 gelieferten Parameter mit vom Pufferspeicher 11 gelieferten Parametern der vorhergehenden Nachricht von dieser Klasse. Sind die Parameter gleich, so liefert der Komparator 10 ein Steuersignal an die Übersetzungseinrichtung 8, welches bewirkt, dass die Übersetzungseinrichtung 8 keine übersetzte Nachricht an die MOST-Sendereinheit 4 ausgibt. Sind die Parameter ungleich, so werden die neuen Parameter in den Pufferspeicher 11 übernommen, und das Steuersignal wird nicht erzeugt, so dass die übersetzte Nachricht auf dem MOST-Bus 2 gesendet wird.

Wenn der von der Klassifikationseinrichtung 7 ausgegebenen Klasse der Nachricht ein Zähler 12 zugeordnet ist, so wird dieser Zähler um 1 dekrementiert. Wenn danach der Stand des Zählers von 0 verschieden ist, liefert der Zähler 12 ein Steuersignal an die Übersetzungseinrichtung 8, das dann diese daran hindert, eine übersetzte Nachricht an die MOST-Sendereinrichtung 4 zu liefern. Wenn der Zählerstand 0 ist, wird das Steuersignal nicht erzeugt, so dass die Übersetzungseinrichtung die Übersetzung liefert, und der Zählerstand wird auf einen vorgegebenen Anfangswert zurückgesetzt.

Eine MOST-Empfängereinrichtung 5 liefert auf dem MOST-Bus 2 empfangene Nachrichten an eine zweite Klassifikationseinrichtung 13, deren Arbeitsweise im wesentlichen der der Klassifikationseinrichtung 7 entspricht. Eine zweite Übersetzungseinrichtung 14 ist an den Ausgang der Klassifikationseinrichtung 13 und einen Speicher 15 angeschlossen, um anhand der Klassenangabe und der Parameter und einer im Speicher 15 für jede Klasse gespeicherten Umsetzungsvorschrift eine empfangene MOST-Nachricht in eine CAN-Nachricht zu übersetzen und zum Senden auf dem CAN-Bus an eine CAN-Sendereinrichtung 6 auszugeben. Auch hier sind bestimmten Klassen von Nachrichten ein Komparator 16 und ein Pufferspeicher 17 zugeordnet, deren Arbeitsweise die gleiche ist, wie oben für die Komparatoren 10 und Pufferspeicher 11 angegeben.

Ferner ist, bestimmten Klassen zugeordnet, an den Ausgang der Klassifikationseinrichtung 13 jeweils eine Anordnung aus einem Zeitgeber 18 und einem Pufferspeicher 19 angeschlossen, wobei der Pufferspeicher 19 dazu dient, die von der Klassifikationseinrichtung 13 gelieferte Klassifikationsangabe und die zu ihr gehörigen Parameter aufzuzeichnen, und vom Zeitgeber 18 in einem vorgegebenen Rhythmus zyklisch veranlasst wird, diese an die Übersetzungseinrichtung 14 zum Erzeugen einer CAN-Nachricht auszugeben.

Die Komponenten 7-19 der Schnittstelle sind zwar oben als diskrete Komponenten beschrieben worden, es liegt jedoch auf der Hand, dass sie auch ohne weiteres in Form eines geeignet programmierten Mikroprozessors mit angeschlossenem Speicher realisierbar sind.

Die Arbeitsweise der Schnittstelle bei der Umsetzung einer CAN-Nachricht in eine MOST-Nachricht wird im folgenden mit Bezug auf Fig. 2 genauer beschrieben.

Wenn eine CAN-Nachricht empfangen worden ist (S1), so überprüft die Klassifikationseinrichtung 7 zunächst, ob die Nachricht einer der ihr bekannten Klassen angehört. Dabei gelten jeweils die Klassen als bekannt, zu denen eine Übersetzungsvorschrift im Speicher 9 vorliegt. Wenn die Nachricht einer unbekannten Klasse angehört, so liegt entweder ein Systemfehler vor, oder es handelt sich um eine Nachricht, die nur zwischen an den CAN-Bus angeschlossenen Geräten ausgetauscht wird, und die nicht für einen an den MOST-Bus angeschlossenen Empfänger bestimmt ist. In beiden Fällen endet das Verfahren (S3), ohne dass die Nachricht übersetzt wird.

Wenn die Klasse der Nachricht bekannt ist, ermittelt die Klassifikationseinrichtung 7 den zugehörigen Tabelleneintrag bzw. das zugehörige Übersetzungsprogramm im Speicher 9 (S4). Der Inhalt des Tabelleintrags bzw. die Arbeitsweise der Übersetzungsprogramme ist abhängig davon, ob es sich um eine Nachricht einer Klasse handelt, die auf dem CAN-Bus und dem MOST-Bus zyklisch, gegebenenfalls mit unterschiedlichen Perioden versendet wird oder nicht.

Wenn in Schritt S5 festgestellt wird, dass die Nachricht auf beiden Bussystemen zyklisch gesendet wird, verzweigt das Verfahren zu Schritt S6, und der der betreffenden Klasse von Nachrichten zugeordnete Zähler 12 wird dekrementiert. In Schritt S7 wird überprüft, ob der Zähler den Wert 0 erreicht hat. Wenn nein, endet das Verfahren (S8), ohne dass eine MOST-Nachricht erzeugt wird. Wenn ja, wird der Zähler in Schritt S9 mit einem vorgegebenen Wert neu geladen, der eine Funktion des Verhältnisses der Wiederholraten ist, mit denen Nachrichten der betreffenden Klasse auf dem CAN-Bus bzw. dem MOST-Bus übertragen werden. Wenn die Häufigkeit, mit der die Nachricht auf dem CAN-Bus übertragen wird, da n-fache der Häufigkeit auf dem MOST-Bus ist, und n eine ganze Zahl ist, so kann der Zähler in Schritt S9 mit dem Wert n neu geladen werden, und beim Dekrementieren in Schritt S6 wird der Zählerinhalt jeweils um 1 vermindert. Wenn die Häufigkeiten in einem rationalen Verhältnis p/q stehen, wobei p,q ganze Zahlen sind, so wird der Zähler in Schritt S9 mit dem Wert p geladen und in Schritt S6 jedes Mal um q dekrementiert.

Anschließend geht das Verfahren über zu Schritt S13, auf den an späterer Stelle eingegangen wird.

Wenn die Überprüfung in Schritt S5 ergibt, dass die Nachricht nicht einer Klasse von Nachrichten angehört, die auf dem MOST-Bus zyklisch übertragen werden, so kann es sich dennoch um eine Nachricht handeln, die zwar auf dem CAN-Bus zyklisch versendet wird, auf dem MOST-Bus aber nur, wenn sich einer ihrer Parameter geändert hat. Daher wird in Schritt S10 überprüft, ob die Nachricht einer solchen Klasse angehört. Wenn ja, wird in Schritt S11 mit Hilfe des Komparators 10 und des Pufferspeichers 11 verglichen, ob sich die Parameter der Nachricht seit ihrer letzten Übermittlung geändert haben. Wenn dies nicht der Fall ist, braucht keine MOST-Nachricht erzeugt zu werden, und das Verfahren geht von Schritt S12 über zu S8. Wenn sich die Parameter geändert haben, muss eine MOST-Nachricht erzeugt werden, und das Verfahren geht von Schritt S12 über zu Schritt S13.

Wenn in Schritt S10 festgestellt wird, dass die Nachricht zu einer Klasse gehört, die weder im CAN- noch im MOST-System zyklisch versendet wird, geht das Verfahren direkt zu Schritt S13 über.

In Schritt S13 wird überprüft, ob die Nachricht einer Klasse angehört, bei der die Parameter im CAN-System und im MOST-System mit unterschiedlichen Einheiten gemessen oder unterschiedlich skaliert sind. Ein Beispiel für einen solchen Parameter ist die Motordrehzahl. Sie wird in CAN-Bus-Nachrichten als vorzeichenloses Byte übermittelt, dessen Zahlenwert gegeben ist durch (Motordrehzahl/rpm-500)/40. Auf dem MOST-Bus hingegen wird sie als vorzeichenloses Wort übermittelt, dessen Zahlenwert direkt der Motordrehzahl in rpm entspricht. Eine eventuell erforderliche Umrechnung wird in Schritt S14 durchgeführt.

Dann wird der zur Klasse der Nachricht passende MOST-Header anhand von im Speicher 9 gespeicherter Übersetzungsinformation ausgewählt (S15) und eine aus dem Header und den zugehörigen Parametern zusammengestellte Nachricht auf dem MOST-Bus ausgesendet (S16).

Falls eine Nachricht mehrere Parameter aufweist, deren Reihenfolge im CAN-Bus-System und im MOST-Bus-System unterschiedlich ist, so kann vorab noch ein in der Fig. nicht dargestellter Schritt des Permutierens erforderlich sein, um die Parameter in die richtige Reihenfolge zu bringen.

Bei dem oben beschriebenen Verfahrensablauf gibt es eine Mehrzahl von Entscheidungsschritten S2, S5, S7, S10, bei denen abhängig von der Klasse einer empfangenen Nachricht über die Art und Weise der Weiterverarbeitung der Nachricht entschieden werden muss. Um diese Entscheidungen zu treffen, ist es möglich, jedes Mal auf den der Klasse entsprechenden Eintrag des Speichers 9 oder auch auf eine Mehrzahl von Einträgen von Speichern zuzugreifen, auf die die zum Übersetzen einer Nachricht einer gegebenen Klasse benötigte Information verteilt ist. Insbesondere wenn die Komponenten der Schnittstelle wie oben bereits erwähnt durch einen Mikroprozessor mit angeschlossenem Speicher realisiert sind, können diese diversen Entscheidungsschritte auch zu einem einzigen Schritt zusammengefasst werden, in dem abhängig von der Klasse der Nachricht ein Übersetzungsprogramm aus dem Speicher 9 ausgewählt wird, das für eine gegebene Klasse spezifisch ist und ohne weitere von der Klasse abhängige Entscheidungen eine direkte Übersetzung der Nachricht ermöglicht.

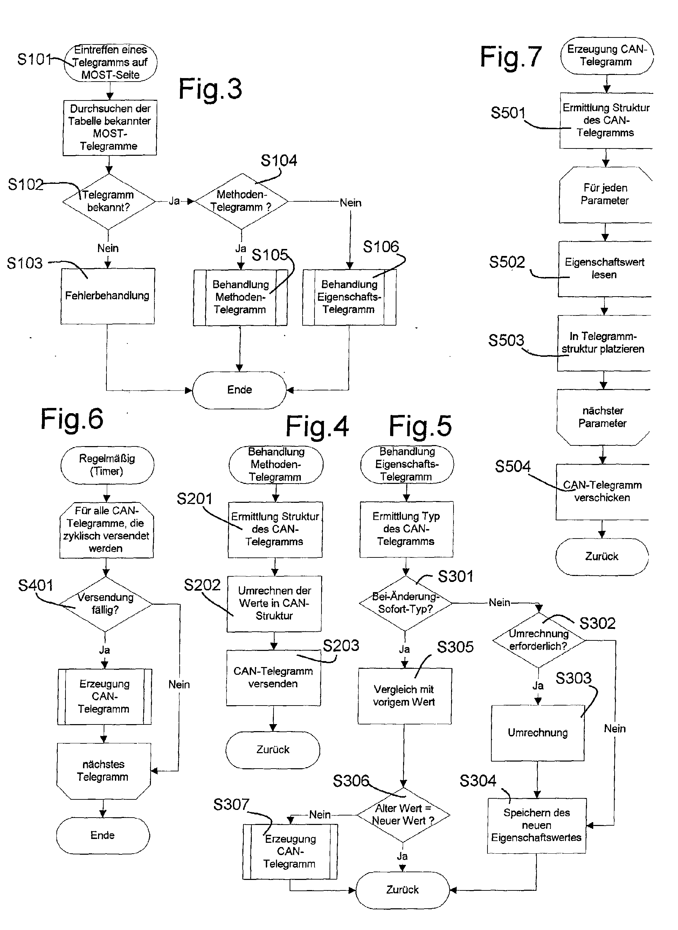

Fig. 3 ist ein Flussdiagramm zur Veranschaulichung der Umsetzung einer auf dem MOST-Bus 2 empfangenen Nachricht in eine CAN-Nachricht.

Nach Empfang einer MOST-Nachricht (S101) überprüft die Klassifikationseinrichtung 13 zunächst, ob die Nachricht einer der ihr bekannten Klassen angehört (S102). Hierzu extrahiert sie aus der MOST-Nachricht eine Funktionsbezeichnung von 3 Byte Länge und prüft, ob diese in einer Liste von bekannten Bezeichnungen enthalten ist. Entsprechend dem mit Bezug auf Fig. 2 beschriebenen Verfahren wird ein Fehler festgestellt und eine Fehlerbehandlung (S103) eingeleitet, wenn die Überprüfung des Schritts S102 ergibt, dass die Nachricht keiner bekannten Klasse angehört. Wenn die Nachricht zu einer bekannten Klasse gehört, so schließt sich in Schritt 104 eine Entscheidung an, ob es sich bei der Nachricht um ein sogenannten Methoden-Telegramm oder ein Eigenschafts-Telegramm handelt, d.h., ob die Nachricht darauf ausgerichtet ist, ein Empfängergerät zu einer Operation zu veranlassen, bei der es aktiv steuernd in seine Umgebung eingreift, oder ob es darum geht, in der Nachricht eine von dem Empfängergerät für andere Aufgaben benötigte Information zu übermitteln.

Fig. 4 zeigt die Behandlung des Methoden-Telegramms. Jedes ordnungsgemäße Methoden-Telegramm muss in eine CAN-Nachricht übersetzt werden. Die Struktur dieser Nachricht ist im Speicher 15 festgelegt und wird in Schritt S201 daraus abgefragt. Zu den abgefragten Strukturinformationen gehören z.B. die Form eines Headers der zu erzeugenden CAN-Nachricht, Bedeutung, Reihenfolge und Skalierung von Parametern, etc.. Anhand dieser Information ist die Übersetzungseinheit 14 in der Lage, Parameterwerte von der im MOST-System verwendeten Skalierung korrekt in die des CAN-Systems umzurechnen und sie mit dem Header in korrekter Reihenfolge zu einer CAN-Nachricht zusammenzustellen (S202). Diese erzeugte Nachricht wird in Schritt S203 von der CAN-Sendereinheit 6 auf den CAN-Bus 1 ausgegeben.

Die in Fig. 5 dargestellte Behandlung eines Eigenschafts-Telegramms ist je nach Klasse, der das Telegramm angehört, unterschiedlich. Auf der CAN-Seite können derartige Eigenschaftstelegramme je nach Art der darin übertragenen Parameter zu drei verschiedenen Gruppen oder Typen gehören, und zwar einem ersten Typ von Nachrichten, die immer nur dann gesendet werden, wenn die darin enthaltenen Parameter von einem Empfängergerät angefordert worden sind, einem zweitem Typ von Nachrichten, die übertragen werden, ohne dass hierfür eine ausdrückliche Anforderung durch ein Empfängergerät erforderlich ist, die allerdings nur dann übertragen werden, wenn eine Änderung des Werts eines darin enthaltenen Parameters aufgetreten ist, oder einem dritten Typ, dessen Nachrichten auch auf dem CAN-Bus zyklisch übertragen werden, allerdings mit einer Wiederholrate, die im allgemeinen von der der entsprechenden Nachrichten auf dem MOST-Bus abweicht. Wenn in Schritt S301 festgestellt wird, dass das Telegramm zum ersten oder dritten Typ gehört, geht die Verarbeitung über zu Schritt S302, wo entschieden wird, ob eine Umrechnung der enthaltenen Parameterwerte erforderlich ist. Diese wird gegebenenfalls im Schritt S303 anhand von im Speicher 15 gespeicherte Umrechnungsinformation durchgeführt, dann wird der so erhaltene Parameterwert in einem zugeordneten Register der Schnittstelle abgespeichert. Eine CAN-Nachricht, mit der dieser geänderte Parameterwert an ein Gerät am CAN-Bus weitergegeben wird, wird bei einer Nachricht des ersten Typs von der Schnittstelle erst erzeugt, wenn ein solches Gerät die Übertragung des Parameterwerts anfordert. Nachrichten des dritten Typs werden zeitgesteuert auf dem CAN-Bus gesendet, wie im folgenden auf Bezug auf Fig. 6 erläutert.

Wenn die Nachricht zum zweiten Typ gehört, wird in Schritt S305 der mit der Nachricht übertragene Parameterwert (oder die übertragenen Parameterwerte, falls die Nachricht mehrere Parameter umfasst) mit dem (oder den) in der vorhergehenden Nachricht der gleichen Klasse übertragenen Parameterwerten verglichen. Wenn dieser Vergleich (S306) ergibt, dass die Werte gleich geblieben sind, endet die Verarbeitung; wenn wenigstens ein Wert verändert ist, wird ein CAN-Telegramm erzeugt (S307).

Fig. 6 veranschaulicht die Verarbeitung derjenigen Klassen von CAN-Nachrichten, die zyklisch versendet werden. Für diese wird regelmäßig in einem Schritt S401 überprüft, ob die Versendung der Nachricht fällig ist. Diese Überprüfung kann z.B. mit Hilfe jeweils eines einer Klasse von derartigen Nachrichten zugeordneten Zeitgebers 18 erfolgen, der die Versendung der Nachricht in regelmäßigen Zeitabständen veranlasst und der, wie bereits oben erläutert, einen Zähler umfassen kann, der zyklisch dekrementiert wird und bei Erreichen von 0 oder einem beliebigen anderen festen Wert das Senden der CAN-Nachricht auslöst. Wenn die Schnittstelle im wesentlichen als programmgesteuerter Mikroprozessor implementiert ist, ist auch eine Vorgehensweise denkbar, bei der der Mikroprozessor in kurzen Zeitabständen die zyklisch zu versendenden Nachrichten darauf abprüft, ob ein für sie geplanter Sendezeitpunkt erreicht ist, und gegebenenfalls das Senden veranlasst und einen neuen Sendezeitpunkt festlegt.

Fig. 7 zeigt im Detail die Schritte, die zum Erzeugen einer CAN-Nachricht durchgeführt werden. Zunächst (S501) ermittelt die Übersetzungseinheit 14 die Struktur der zu erzeugenden CAN-Nachricht anhand der von der Klassifikationseinrichtung 13 gelieferten Klasse aus dem Speicher 15. Für jeden Parameter der zu erzeugenden CAN-Nachricht liest die Übersetzungseinheit 14 den entsprechenden Parameterwert aus der empfangenen MOST-Nachricht (S502), führt gegebenenfalls eine Umrechnung der Parameterwerte sowie eine Permutation der Reihenfolge der Parameter durch, um diese in die richtige Ordnung für die zu erzeugende CAN-Nachricht zu bringen (S503) und gibt schließlich (S504) die erzeugte CAN-Nachricht an die Sendereinheit 6 aus.

## Patentansprüche

1. Schnittstelle für die Übermittlung von Nachrichten zwischen zwei Bussystemen, mit
- einer ersten Empfängereinrichtung (3) zum Empfangen einer Nachricht von dem ersten Bussystem (1),
- einer ersten Klassifikationseinrichtung (7) zum Klassifizieren der von der ersten Empfängereinrichtung (3) empfangenen Nachricht in eine von mehreren vorgegebenen Klassen,
- einer ersten Übersetzungseinrichtung (8) zum Übersetzen der Nachricht in eine auf dem zweiten Bussystem (2)zu sendende Nachricht anhand einer für jede Klasse vorgegebenen Vorschrift, und
- einer ersten Sendereinrichtung (4) zum Senden der übersetzten Nachricht auf dem zweiten Bussystem (2).

2. Schnittstelle nach Anspruch 1, ferner mit
- einer zweiten Empfängereinrichtung (5) zum Empfangen einer Nachricht von dem zweiten Bussystem (2),
- einer zweiten Klassifikationseinrichtung (13) zum Klassifizieren der von der zweiten Empfängereinrichtung (5) empfangenen Nachricht in eine von mehreren vorgegebenen Klassen,
- einer zweiten Übersetzungseinrichtung (14) zum Übersetzen der Nachricht in eine auf dem ersten Bussystem (1) zu sendende Nachricht anhand einer für jede Klasse vorgegebenen Vorschrift, und
- einer zweiten Sendereinrichtung (6) zum Senden der übersetzten Nachricht auf dem ersten Bussystem (1).

3. Schnittstelle nach Anspruch 1 oder 2, **dadurch gekennzeichnet, dass** jede Klassifikationseinrichtung (7, 13) die Klasse einer empfangenen Nachricht anhand eines in der Nachricht enthaltenen Klassifizierungsdatums festlegt.

4. Schnittstelle nach einem der vorhergehenden Ansprüche, **gekennzeichnet durch** einen Zeitgeber (18), der auf den Empfang einer Nachricht über eines der Bussysteme (2) ein zyklisches Aussenden der übersetzten Nachricht auf dem anderen Bussystem (1) steuert.

5. Schnittstelle nach einem der vorhergehenden Ansprüche, **gekennzeichnet durch** eine Wiederholraten-Anpassungseinrichtung (12) zum Steuern des Sendens von **durch** Übersetzen von auf einem der Bussysteme (1) mit einer ersten Wiederholrate gesendeten Nachrichten erhaltenen Nachrichten mit einer zweiten Wiederholrate auf dem anderen Bussystem (2).

6. Schnittstelle nach einem der vorhergehenden Ansprüche, **gekennzeichnet durch** einen Zähler (12) zum Zählen der auf einem der Bussysteme (1) eintreffenden Nachrichten einer bestimmten Klasse, und zum Veranlassen des Sendens der übersetzten Nachricht auf dem jeweils anderen Bussystem (2), wenn der Zählwert des Zählers einen Grenzwert überschreitet.

7. Schnittstelle nach Anspruch 6, **dadurch gekennzeichnet, dass** wenn der Zählwert des Zählers (12) einen Grenzwert überschreitet, er mit einem vorgegebenen Wert neu geladen wird.

8. Schnittstelle nach einem der vorhergehenden Ansprüche, **gekennzeichnet durch** einen Komparator (10, 16) zum Vergleichen einer von einem der Bussysteme (1, 2) empfangenen Nachricht einer gegebenen Klasse mit einer zuvor von dem einen Bussystem (1, 2) empfangenen Nachricht der gleichen Klasse, und zum Ausgeben der empfangenen Nachricht nur dann, wenn ihr Inhalt von dem der zuvor empfangenen Nachricht der gleichen Klase verschieden ist.

9. Schnittstelle nach einem der vorhergehenden Ansprüche, **dadurch gekennzeichnet, dass** die Übersetzungseinrichtung (8, 14) eine Permutiereinheit zum Permutieren von Elementen der empfangenen Nachricht umfasst

10. Schnittstelle nach einem der vorhergehenden Ansprüche, **dadurch gekennzeichnet, dass** die Übersetzungseinrichtung (8, 14) eine Recheneinheit zum Anwenden einer mathematischen Rechenvorschrift auf ein Element der Nachricht umfasst.

11. Schnittstelle nach einem der vorhergehenden Ansprüche, **dadurch gekennzeichnet, dass** die Übersetzungseinrichtung (8, 14) programmgesteuert ist und an einen Speicher zum Speichern (9, 15) der Vorschriften für die Übersetzung in Programmform angeschlossen ist.

12. Schnittstelle nach einem der vorhergehenden Ansprüche, **dadurch gekennzeichnet, dass** die Bussysteme ein CAN-Bussystem (1) und ein MOST-Bussystem (2) sind.

13. Verfahren zum Übertragen einer Nachricht von einem ersten Bussystem in ein zweites, mit den Schritten
a) Klassifizieren der vom ersten Bussystem empfangenen Nachricht in eine von mehreren vorgegebenen Klassen,
b) Auswählen einer Übersetzungsvorschrift anhand der Klassifizierung,
c) Übersetzen der Nachricht anhand der ausgewählten Übersetzungsvorschrift,
d) Ausgeben der übersetzten Nachricht auf dem zweiten Bussystem.

14. Verfahren nach Anspruch 13, **dadurch gekennzeichnet, dass** Schritt a das Identifizieren eines Klassifizierungsdatums in der Nachricht umfasst.

15. Verfahren nach Anspruch 13 oder 14, **dadurch gekennzeichnet, dass** für wenigstens eine Klasse von Nachrichten Schritt d zyklisch wiederholt wird.

16. Verfahren nach einem der Ansprüche 13 bis 15, **dadurch gekennzeichnet, dass** für wenigstens eine Klasse von Nachrichten eine empfangene Nachricht mit einer vorher empfangenen Nachricht der gleichen Klasse verglichen wird und Schritt d nur ausgeführt wird, wenn der Inhalt der empfangenen Nachricht von dem der zuvor empfangenen verschieden ist.

17. Verfahren nach einem der Ansprüche 13 bis 16, **dadurch gekennzeichnet, dass** das Übersetzen ein Permutieren von Elementen der Nachricht umfasst.

18. Verfahren nach einem der Ansprüche 13 bis 17, **dadurch gekennzeichnet, dass** das Übersetzen das Anwenden einer mathematischen Rechenvorschrift auf ein Element der Nachricht umfasst.
